# EUROPÄISCHE PATENTSCHRIFT

(11) **EP 1 456 687 B1**
(45) Veröffentlichungstag und Bekanntmachung des Hinweises auf die Patenterteilung: **25.06.2014**
(21) Anmeldenummer: 02794963.5
(22) Anmeldetag: 30.11.2002
(51) Int. Cl.: G01S 7/497, G01S 17/10

(54) **VERFAHREN ZUR ABSTANDSMESSUNG**
METHOD FOR MEASURING DISTANCE
PROCEDE DE MESURE DE DISTANCE

(30) Priorität: 22.12.2001 DE 10163925
(43) Veröffentlichungstag der Anmeldung: 15.09.2004
(73) Patentinhaber: Conti Temic microelectronic GmbH, 90411 Nürnberg (DE)
(72) Erfinder: BEUSCHEL, Michael, D-85134 Stammham (DE)
(86) Internationale Anmeldenummer: PCT/DE2002/004400
(87) Internationale Veröffentlichungsnummer: WO 2003/056357

(56) Entgegenhaltungen:
- EP-A- 1 176 430
- WO-A-01/96900
- DE-A- 4 141 469
- DE-A- 10 115 152
- DE-A- 19 541 448
- US-A- 5 949 530

## Beschreibung

Die Erfindung betrifft ein Verfahren zur Abstandsmessung mit einer aktiven optischen Sensoranordnung nach dem Oberbegriff des Patentanspruchs 1. Das erfindungsgemäße Verfahren eignet sich insbesondere als Auswerteverfahren für optische Precrash-Sensoren in Fahrzeugen.

Um die Sicherheit im Straßenverkehr zu verbessern, werden verstärkt optische Sensoranordnungen als Hinderniswarnsysteme in Fahrzeuge eingebaut, die zur Unterstützung des Fahrers und des Insassenschutzsystems vor allem die unmittelbare Umgebung vor dem sich bewegenden Fahrzeug erfassen und vor Gefahrenquellen wie beispielsweise stehenden oder sich bewegenden Hindernissen auf der Fahrbahn warnen. Hierfür werden z.B. sogenannte CV-Sensoren (closing velocity, Annäherungsgeschwindigkeit) eingesetzt, die auf einer Abstandsmessung mittels Puls-Laufzeit-Verfahren und Abtastung der empfangenen Signale arbeiten. Die folgenden Ausführungen beziehen sich daher auf diesen Anwendungsfall, sind aber auch bei anderen Sensoren vergleichbarer Art einsetzbar.

Bei der Bestimmung der Entfernung eines Objekts aus den abgetasteten Messwerten eines CV-Sensors wird durch mehrere Effekte eine Drift des Ergebnisses verursacht:
- Die Laufzeiten der Triggerelektronik variieren mit der Temperatur.
- Die Pulsform des Senders ändert sich in Amplitude und Form mit der Temperatur.
- Die Kennwerte der verwendeten Bauteile (und damit Frequenzgang und Laufzeit der Schaltung) sind temperaturabhängig und unterliegen einer Streuung.

Zur Kalibrierung der Entfernungsmessung wird für jeden Betriebszustand eine Referenzmessung mit einem Objekt in bekanntem Abstand benötigt.

Die Differenz zwischen der berechneten Entfernungen des bekannten Objekts und der berechneten Entfernungen zu einem anderen Objekt entspricht dann stets der tatsächlichen Entfernungsdifferenz zwischen beiden Objekten. Durch Addition der Entfernung des bekannten Objekts wird die absolute Entfernung des unbekannten Objekts bestimmt. Damit ist die Abstandsmessung kalibriert.

Bisher wird beispielsweise der Ansatz verfolgt, eine temperaturabhängige **Korrekturfunktion** oder **-tabelle** für die berechneten Entfernungswerte zu verwenden. Wegen Bauteilstreuungen ist dazu eine Kalibrierung jedes Sensors im Rahmen der Fertigung notwendig. Andere Effekte außer Temperaturdrift werden dabei nicht berücksichtigt oder bedeuten einen erheblichen Mehraufwand (z.B. bei Abhängigkeit von der Senderleistung).

Weiterhin sind in der DE 195 41 448 A1 eine Vorrichtung und ein Verfahren zur Entfernungsmessung bei einem Fahrzeug beschrieben. Daraus ist bekannt, die Entfernung durch Auswertung der Signalflanke zu bestimmen. Es wird gelehrt, alle Nahbereichs-Reflexionen durch einen zeitlich variablen Schwellenwertpegel auszublenden. Diese zeitlich variable Schwelle verursacht jedoch Fehler bei der Abstandbestimmung, die mit hohem Aufwand korrigiert werden müssen.

DE 10115152 A gibt ein Verfahren zur Abstandsmessung mittels Laufzeitmessung von Laserimpulsen für Fahrzeuge an. Es wird vorgeschlagen als Referenzsignal für die Abstandsmessung den an einer Abschlußwandung des Sensorsystems reflektierten Teil der Sendestrahlung zu nutzen. Dazu wird die Laufzeit der reflektierten Strahlung ermittelt und als Referenzwert genutzt.
Auch in EP 1176430 A wird eine optoelektronische Vorrichtung zur Erfassung von Umgebungsobjekten angegeben. Es wird ein Teil der Sendestrahlung als Referenzstrahl ausgekoppelt und über eine Referenzstrecke mit vorgegebener Länge zum Empfänger geführt. Die gemessene Laufzeit wird als Referenzwert für die Korrektur von weiteren Laufzeitmessungen verwendet.

Der Erfindung liegt die Aufgabe zugrunde, ein Verfahren zur Entfernungsmessung mit einer optischen Sensoranordnung nach dem Oberbegriff des Anspruchs 1 anzugeben, mit dem eine automatische Entfernungskalibrierung ermöglicht wird.

Gelöst wird diese Aufgabe durch ein Verfahren mit den im Anspruch 1 angegebenen Merkmalen.

Das Verfahren nach Anspruch 1 weist die Vorteile auf, dass auf einfache Art und Weise eine automatische Kalibrierung der Entfernung durchgeführt werden kann, ohne dass sich hierdurch, wie aus dem Stand der Technik bekannt, neue Fehler für die Entfernungsmessung ergeben, die ihrerseits wieder aufwändig korrigiert werden müssen.

Vorteilhafte Ausgestaltungen des Verfahrens nach Anspruch 1 sind in den Unteransprüchen angegeben.

Die Erfindung wird nun anhand eines Ausführungsbeispiels unter Zuhilfenahme der Zeichnung erläutert.

Es zeigen
- Fig. 1a:: ein Diagramm mit der zeitlichen Abfolge der Helligkeit von Störlichtkorrekturwerten aus einer Störlichtkorrektur und eine aus diesen Störlichtkorrekturwerten ermittelte Referenzentfernung,
- Fig. 1b:: ein Diagramm mit der zeitlichen Abfolge der Helligkeit von korrigierten Abtastwerten, der Referenzentfernung aus Fig. 1a, der aus den korrigierten Abtastwerten ermittelten Objektentfernung und die kalibrierte Objektentfernung und
- Fig. 2:: einen Ablaufplan mit dem erfindungsgemäßen Algorithmus zur Entfernungskalibrierung.

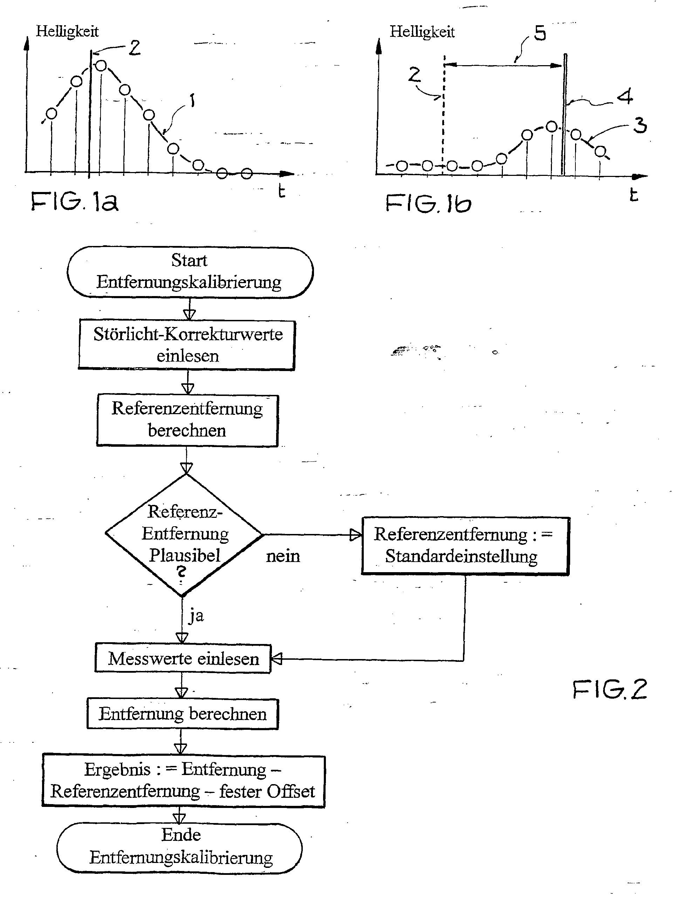

Die Fig. 1a zeigt ein Zeitdiagramm, das eine Kurve 1 mit der Helligkeit von Störlichtkorrekturwerten aus einer Störlichtkorrektur beinhaltet. und eine aus diesen Störlichtkorrekturwerten ermittelte Referenzentfernung 2. Die Störlichtkorrekturwerte werden hierbei aus einer zuvor durchgeführte Störlichtkorrektur gewonnen, wie dies beispielsweise aus der Druckschrift DE 41-41 469 A1 bekannt ist.

Die erfindungsgemäße Lösung basiert neben einer zuvor durchgeführten Störlichtkorrektur noch auf folgenden Annahmen:
- Es bestehen Reflexionen innerhalb des Sensorgehäuses und an der transparenten Sensorabdeckung (z.B. Windschutzscheibe, Scheinwerferabdeckung, einschließlich Verschmutzung) im messbaren Bereich (d.h. die Amplitude dieser Signalanteile ist nicht zu gering).
- Die dadurch erzeugten Signalanteile sind stets deutlich größer als alle anderen Störlichtanteile (z.B. durch Motorhaube, Nebel).
- Im Vergleich zum Störlichtanteil tritt nur geringes elektrisches Übersprechen und geringe Asymmetrie der einzelnen Messwerte auf.
- Die Störlichtkorrektur wird in regelmäßigen Abständen adaptiert.

Damit können die genannten Störlichtanteile als reflektiertes Licht eines sehr nahen (fiktiven) Objekts interpretiert und damit als Referenzmessung bzw. Referenzentfernung 2 verwendet werden. Der tatsächliche Abstand dieses fiktiven Referenzobjekts ist konstruktiv bedingt und kann als fester Parameter im Sensor abgelegt werden.

In **Fig. 1b** ist ein Zeitdiagramm dargestellt, das in einer Kurve **3** die Helligkeit von korrigierten Abtastwerten, die aus diesen korrigierten Abtastwerten ermittelten Objektentfernung **4** und die Referenzentfernung **2** aus Fig. 1a enthält. Aus der Differenz zwischen der aus den korrigierten Abtastwerten ermittelten Objektentfernung **4** und der Referenzentfernung **2** ergibt sich die durch einen Pfeil **5** symbolisierte kalibrierte Objektentfernung.

**Fig. 2** zeigt einen Ablaufplan mit dem erfindungsgemäßen Algorithmus zur Entfernungskalibrierung. Während des Betriebs wird aus den gespeicherten Störlichtkorrekturwerten der Kurve **1** in Fig. 1a der Störlichtkorrektur in regelmäßigen Abständen analog zu den abgetasteten Messwerten eine fiktive Entfernung 2 berechnet (z.B. durch Schwerpunkbildung der Störlichtkorrekturwerte). Diese Entfernung 2 wird als Offset von allen berechneten Objekt-Entfernungen, also der Objektentfernung 4 in Fig. 1b, abgezogen.

Da der Störlichtanteil auch von externen Faktoren abhängt, sollten zur Vermeidung von falschen Messergebnissen folgende Maßnahmen vorgesehen werden:
- Überprüfung der Amplitude der Störlichtkorrekturwerte gemäß Kurve 1 in Fig. 1a auf Plausibilität (z.B. Mindest-wert, eindeutiges Maximum).
- Beschränkung der ausgewerteten Störlichtkorrekturwerte aus Kurve **1** auf einen bestimmten Entfernungsbereich.
- Überprüfung des zulässigen Bereichs der Referenzentfernung **2** (min. und max. mögliche fiktive Entfernung).
- Tiefpassfilterung der Referenzentfernung **2** und Begrenzung deren maximalen (positiven) Gradienten (max. Änderung pro Zeiteinheit).
- Vergleich der Referenzentfernungen **2** aller Kanäle bei mehrkanaliger Messung.

Fällt eine dieser Plausibilitätsprüfungen negativ aus, kann entweder auf den letzten zuverlässigen Entfernungskorrekturwert oder auf eine Standard-Einstellung zurückgegriffen werden, oder die Referenzentfernung wird als Funktion vorausgehender-und mit positiver Plausibilitätsprüfung ermittelter Referenzentfernungen bestimmt. Als zusätzlicher Abgleich kann ein fest eingespeicherter oder während der Fertigung ermittelter fester Offset als Referenzentfernung **2** vorgesehen werden.

Bei stationären Messungen, d.h. bei stehendem Fahrzeug, wird eine ungültige (d.h. zu große) Referenzentfernung ermittelt; für diesen Betriebsbereich sind aber keine Messungen des CV-Sensors spezifiziert, da ein--ruhendes Objekt keine Kollisionsgefahr darstellt. Nähert sich dennoch ein weiteres Objekt mit hoher Geschwindigkeit, kann trotzdem eine Geschwindigkeit ermittelt werden, da der Signalanteil durch das bewegte Objekt nicht durch die Störlichtkorrektur unterdrückt wird. Lediglich die gemessene Entfernung wird zu gering ausgegeben.

Verschwindet das zuvor ruhende Objekt dagegen aus dem Blickfeld des Sensors, werden die Werte der Störlichtkorrektur sehr rasch auf die relevanten Werte adaptiert. Eine korrekte Referenzentfernung kann damit wieder bestimmt werden.

Der vorgeschlagene Algorithmus eignet sich u.U. auch für eine grobe indirekte Messung der Temperatur bei bekannter Temperaturabhängigkeit des Entfernungsdrift. Dies würde auch einen ggf. benötigten Temperatursensor erübrigen.

Da der beschriebene Algorithmus auf einer Störlichtkorrektur aufbaut, sind beide Algorithmen aufeinander abzustimmen. Insbesondere ist ein ausreichend langsames Verhalten der Adaption der Störlichtkorrektur vorzusehen.

Falls keine zuverlässig auftretenden oder nur- zu geringe Störlichtanteile der zuvor genannten Art vorhanden sind, kann ein zusätzlicher Anteil durch geeignete optische Auslegung zurückgekoppelt werden.

### Bezugszeichenliste

| | | | |
|---|---|---|---|
| 1 | Helligkeitskorrekturwerte | 2 | ermittelte Referenzentfernung |
| 3 | Helligkeit korrigierter Abtastwerte | 4 | gemessene Objektentfernung |
| 5 | kalibrierte Objektentfernung | | |

## Patentansprüche

1. Verfahren zur Abstandsmessung mit einer aktiven optischen Sensoranordnung in einem Fahrzeug, wobei der Abstand mittels Puls-Laufzeit-Verfahren gemessen und ein Abstandskorrekturwert für den gemessenen Abstand (4) ermittelt wird und
der Abstandskorrekturwert anhand von konstruktionsbedingtem und einbauortabhängigem Störlicht ermittelt wird,
**dadurch gekennzeichnet, dass**
a) eine Störlichtkorrektur zur Bestimmung von Störlichtkorrekturwerten durchgeführt wird, und
b) eine Referenzentfernung (2) aus den Störlichtkorrekturwerten bestimmt und der Abstandskorrekturwert aus der bestimmten Referenzentfernung ermittelt wird.

2. Verfahren nach Anspruch 1,
**dadurch gekennzeichnet, dass**
der Abstandskorrekturwert vom gemessenen Abstand subtrahiert wird.

3. Verfahren nach Anspruch 1 oder 2,
**dadurch gekennzeichnet, dass**
vom gemessenen Abstand zudem ein fester Offset subtrahiert wird.

4. Verfahren nach einem der vorherigen Ansprüche,
**dadurch gekennzeichnet, dass**
die Sensoranordnung in einem Gehäuse angeordnet ist und die Störlichtkorrekturmessung anhand von Reflexionen innerhalb des Sensorgehäuses durchgeführt wird.

5. Verfahren nach einem der vorherigen Ansprüche,
**dadurch gekennzeichnet, dass**
die Störlichtkorrekturmessung anhand von Reflexionen an der Windschutzscheibe, der Scheinwerferabdeckung oder der Karosserie des Fahrzeugs durchgeführt wird.

6. Verfahren nach einem der vorherigen Ansprüche,
**dadurch gekennzeichnet, dass**
die Referenzentfernung auf Plausibilität geprüft wird.

7. Verfahren nach Anspruch 6,
**dadurch gekennzeichnet, dass**
bei einer negativ ausfallenden Plausibilitätsprüfung die Referenzentfernung auf einen standardmäßig voreingestellten Wert eingestellt wird.

8. Verfahren nach Anspruch 6,
**dadurch gekennzeichnet, dass**
bei einer negativ ausfallenden Plausibilitätsprüfung die Referenzentfernung als Funktion vorausgehender und mit positiver Plausibilitätsprüfung ermittelten Referenzentfernungen bestimmt wird.

## Claims

1. A method for measuring distance by means of an active optical sensor arrangement in a vehicle, wherein the distance is measured using a time of flight method, and a distance correction value is determined for the distance (4) measured, and the distance correction value is determined on the basis of interference light which is construction-related and dependent on the installation location, **characterized in that**:
a) a correction of interference light is performed for determining interference light correction values, and
b) a reference distance (2) is determined based on the interference light correction values, and the distance correction value is determined from the given reference distance.

2. The method according to claim 1,
**characterized in that**
the distance correction value is subtracted from the measured distance.

3. The method according to claim 1 or 2, **characterized in that** a fixed offset is also subtracted from the measured distance.

4. The method according to any one of the preceding claims,
**characterized in that**
the sensor arrangement is arranged in a housing, and the correction of interference light is performed based on reflections within the sensor housing.

5. The method according to any one of the preceding claims,
**characterized in that**
the correction of interference light is performed based on reflections on the windscreen, the headlight cover, or the body of the vehicle.

6. The method according to any one of the preceding claims,
**characterized in that**
the reference distance is checked for plausibility.

7. The method according to claim 6,
**characterized in that**,
in case of a negative plausibility check, the reference distance is set to a default pre-set value.

8. The method according to claim 6,
**characterized in that**,
in case of a negative plausibility check, the reference distance is determined as a function of preceding reference distances which have been determined with a positive plausibility check.

## Revendications

1. Procédé pour la mesure de distance avec un ensemble capteur optique actif dans un véhicule, la distance étant mesurée au moyen d'un procédé « impulsion-temps de parcours » et une valeur de correction de distance étant déterminée pour la distance mesurée (4) et la valeur de correction de distance étant déterminée à l'aide de la lumière parasite due à la construction et dépendant de l'emplacement de montage, **caractérisé en ce que**
a) une correction de lumière parasite pour la détermination des valeurs de correction de lumière parasite est effectuée, et
b) une distance de référence (2) est déterminée à partir des valeurs de correction de lumière parasite et la valeur de correction de distance est déterminée à partir de la distance de référence déterminée.

2. Procédé selon la revendication 1,
**caractérisé en ce que**
la valeur de correction de distance est soustraite de la distance mesurée.

3. Procédé selon la revendication 1 ou 2,
**caractérisé en ce que**,
en outre, un décalage fixe est soustrait de la distance mesurée.

4. Procédé selon l'une des revendications précédentes,
**caractérisé en ce que**
l'ensemble capteur est disposé dans un boîtier et la mesure de correction de lumière parasite est effectuée à l'aide des réflexions à l'intérieur du boîtier de capteur.

5. Procédé selon l'une des revendications précédentes,
**caractérisé en ce que**
la mesure de correction de lumière parasite est effectuée à l'aide des réflexions sur le pare-brise, sur la vitre de phare ou sur la carrosserie du véhicule.

6. Procédé selon l'une des revendications précédentes,
**caractérisé en ce que**
la distance de référence fait l'objet d'un contrôle de vraisemblance.

7. Procédé selon la revendication 6,
**caractérisé en ce que**,
si un contrôle de contrôle de vraisemblance est négatif, la distance de référence est réglée sur une valeur préréglée par défaut.

8. Procédé selon la revendication 6,
**caractérisé en ce que**,
si un contrôle de vraisemblance est négatif, la distance de référence est définie comme une fonction de distances de référence précédentes et déterminées avec un contrôle de vraisemblance positif.
